Europäisches Patentamt

European Patent Office

Office européen des brevets

(19)

(11) Veröffentlichungsnummer : **0 161 505**
**B1**

(12) EUROPÄISCHE PATENTSCHRIFT

(45) Veröffentlichungstag der Patentschrift :
11.01.89

(51) Int. Cl.⁴ : **B 23 B 27/16**

(21) Anmeldenummer : 85104504.7

(22) Anmeldetag : 13.04.85

(54) Klemmstahlhalter mit eingesetzter Schneidplatte.

(30) Priorität : 17.04.84 DE 3414435

(43) Veröffentlichungstag der Anmeldung :
21.11.85 Patentblatt 85/47

(45) Bekanntmachung des Hinweises auf die Patenterteilung : 11.01.89 Patentblatt 89/02

(84) Benannte Vertragsstaaten :
AT BE CH DE FR GB IT LI LU NL SE

(56) Entgegenhaltungen :
EP--B-- 0 054 291
DE--A-- 1 627 099
DE--A-- 2 935 435
DE--B-- 1 232 436
FR--A-- 1 245 148
FR--A-- 2 139 951
GB--A-- 1 140 841
GB--A-- 1 254 578
US--A-- 3 491 421
US--A-- 4 337 562
PATENTS ABSTRACTS OF JAPAN, Band 7, Nr. 283
(M-263)[1428], 16. Dezember 1983; & JP - A - 58 160
002 (MITSUBISHI KINZOKU K.K.) 22.09.1983

(73) Patentinhaber : **Feldmühle Aktiengesellschaft**
**Fritz-Vomfelde-Platz 4**
**D-4000 Düsseldorf 11 (DE)**

(72) Erfinder : **Kraft, Harald, Dipl.-Ing.**
**Aspachstrasse 9**
**D-7336 Uhingen 1 (DE)**
Erfinder : **Eder, Otto**
**Hermann-Hesse-Weg 7**
**D-7316 Köngen (DE)**

EP 0 161 505 B1

## Beschreibung

Die Erfindung betrifft einen Klemmstahlhalter mit eingesetzter Schneidplatte aus einem spröden, gesinterten Hartstoff, die eine Befestigungsbohrung aufweist, bestehend aus einem Klemmhalter mit einer Ausnehmung zur Aufnahme einer Stützplatte und der Schneidplatte, einem die Stützplatte durchgreifendem Spannelement, dessen Kopf in eine in der Befestigungsbohrung der Schneidplatte angeordnete Klemmhülse aus einem verformbaren Material eingreift.

Aus der US-PS 3 314 126 ist bekannt, daß bei einem Klemmstahlhalter durch eine Ringnut in der Spannschraube ein Kniehebel als Spannelement beaufschlagt wird, der im Stahlhalter gelagert ist und dessen Spannarm durch die Ausnehmung des Stahlhalters hindurch in die Befestigungsbohrung der Schneidplatte eingreift. Durch Anziehen der Spannschraube wird der Druckarm nach unten bewegt, so daß sich der Kopf des Spannarmes an die Wandung der Bohrung der Schneidplatte anlegt und diese damit in der vorgesehenen Position in der Ausnehmung des Stahlhalters festliegt. Die aus Karbidmaterialien, also Hartmetall, bestehende Schneidplatte wird von der Bohrung her durch den Kniehebel punktförmig belastet, wobei recht hohe Kräfte übertragen werden müssen, um einen einwandfreien Sitz der Schneidplatte zu gewährleisten. Da Hartmetalle relativ zähe Werkstoffe sind, führt diese Punktbelastung zu keinen Schäden an der Schneidplatte.

Sinterkeramische Werkstoffe weisen gegenüber Hartmetall jedoch ganz andere Eigenschaften auf. So haben sie neben vielen positiven Werten, wie beispielsweise größerer Wärmebeständigkeit, eine wesentlich höhere Sprödigkeit als Hartmetall, d. h., daß diese punktförmige Belastung insbesondere bei zusätzlicher schwerer Belastung des Stahlhalters durch den Schneidvorgang zur Rißbildung und damit auch zum Bruch der Schneidplatte führen kann.

Durch die DE-PS 21 02 479 ist ein ähnlicher Klemmhalter bekannt geworden. Bei diesem weist die Schneidplatte eine schräg verlaufende Bohrung auf und ein Spannhebel greift an dem dadurch gebildeten spitzen Winkel zwischen Unterfläche und Bohrung an. Es kommt dabei zu einer linienförmigen Berührung zwischen dem zylindrischen Spannarm und der Bohrungswandung. Durch das Anziehen der Spannschraube wird insbesondere der untere Bereich der Berührungslinie beaufschlagt. Es wird also ein ungleichmäßig verteilter Druck in der Bohrung auf die Schneidplatte ausgeübt, so daß auch hier nur Schneidplatten mit einer hohen Zähigkeit diese Beanspruchung überstehen können.

Ähnliche Klemmhalterkonstruktionen werden in den DE-OS 15 02 032, 18 09 775 und 25 14 882 beschrieben. Alle diese Vorschläge weisen den gemeinsamen Nachteil auf, daß sie die Schneidplatte von der Bohrung her punkt- oder linienförmig belasten und damit einen extrem hohen Punkt- oder Liniendruck in die Schneidplatte einbringen, der beim Einsatz von keramischen Schneidplatten, insbesondere oxidkeramischen Schneidplatten, zum Bruch der Schneidplatte führt.

Keramische Schneidplatten wurden deshalb meist mit Klemmhaltern verwendet, die eine mechanische Klemmung mittels Reibschluß aufweisen. Man geht bisher davon aus, daß beim Einbringen eines Spannelementes in die Bohrung der Schneidplatte diese durch punkt- oder linienförmige Belastung so beansprucht wird, daß sie bereits beim Spannen bzw. Eintritt in das Werkstück bricht.

Das Einbringen von Büchsen in Schneidplatten als solches ist bereits aus der DE-OS 29 35 435 bekannt. Gemäß dieser Schrift werden Kunststoff- oder Metallbuchsen in eine Bohrung in der Schneidplatte eingeklebt oder eingebördelt und im Anschluß daran mit einem Innengewinde versehen, so daß die Schneidplatte mittels einer Schraube ohne weitere Befestigungsmittel direkt auf einen Halter aufgeschraubt werden kann. Dieser sehr theoretische Vorschlag konnte, wenngleich auch für Schneidplatten aus Oxidkeramik gemacht, nicht verwirklicht werden, da die geforderte feste Verbindung der Gewindebuchse mit der Keramik der Schneidplatte weder durch Kleben noch durch Umbördeln zu erreichen war. Weder Kleber noch Kunststoffe halten den auftretenden Temperaturen stand, die oft über 600 Grad liegen. Bei den geringen zur Verfügung stehenden Dimensionen ist auch eine Befestigung mittels Gewinde illusorisch, da das zum Umbördeln erforderliche relativ weiche Material durch die Temperatureinwirkung weitere Festigkeitseinbußen hinnehmen muß, die feinen, darin eingebrachten Gewindegänge damit nicht mehr die erforderliche Tragfähigkeit besitzen, d. h., daß das Gewinde ausreißt. Ferner trat bei der Konstruktion das Problem der Druckverteilung auf die Keramik überhaupt nicht auf.

Die vorliegende Erfindung geht von der JP-A-58-160 002 aus, veröffentlicht in Patent Abstract of Japan, Band 7, Nr. 283 (M-263) (1428), 16. Dezember 1983. Aus dieser Veröffentlichung ist bekannt, in einer Schneidplatte aus Hartstoffen ein metallisches Rohr anzuordnen, das aus einem weicheren Material als der Hartstoff, aus dem die Schneidplatte gefertigt wurde, besteht, um den in der Bohrung der Schneidplatte auftretenden Druck zu verteilen. Da bei dieser Konstruktion das Metallrohr in der Wegwerfschneidplatte verbleibt, wird es auch nach Verschleiß der Platte mit dieser weggeworfen.

Aufgabe der vorliegenden Erfindung ist daher, bei einer analogen Klemmung der Schneidplatte mit einer eingesetzten Buchse diese so auszugestalten, daß sie mehrfach eingesetzt werden kann.

Diese Aufgabe wird gelöst durch einen Klemmstahlhalter mit eingesetzter Schneidplatte aus einem spröden, gesinterten Hartstoff, die eine Befestigungsbohrung aufweist, bestehend aus einem Klemmhalter mit einer Ausnehmung zur Aufnahme einer Stützplatte und der Schneidplatte, einem die Stützplatte durchgreifendem Spannelement, dessen Kopf in eine in der Befestigungsbohrung der Schneidplatte angeordnete Klemmhülse aus einem verformbaren Material eingreift, der durch die Kombination folgender Merkmale gekennzeichnet ist. Das Spannelement ist an seinem in die Klemmhülse eingreifendem Ende mit einem balligen Kopf und die Klemmhülse mit einem Innenansatz versehen, gegen den der ballige Kopf anliegt.

Die Klemmhülse ist als separates Teil ausgeführt und mittels einer Gleitsitzpassung mit der Befestigungsbohrung der Schneidplatte verbunden. Sie weist dabei im Inneren einen Ansatz auf, so daß sie auf den balligen Kopf des Spannarmes aufgesetzt werden kann und über ihn bis zum Ansatz hinuntergleitet. Danach kann darauf die Schneidplatte aufgebracht werden.

Eine andere sehr zweckmäßige Ausgestaltung der Erfindung ist durch die Kombination folgender Merkmale gekennzeichnet. Das Spannelement ist an seinem in die Klemmhülse eingreifendem Ende mit einem balligen Kopf, die Klemmhülse mit einem durchgehenden Längsschlitz und einer inneren Ringnut versehen in die der ballige Kopf eingreift. Die lichte Weite der Klemmhülse ist dabei geringer als der größte Durchmesser des balligen oder kugeligen Kopfes, so daß die Klemmhülse entgegen der ihr inne wohnenden Federspannung unter geringem Druck auf den Kopf aufgeschoben werden kann. Die Positionierung ergibt sich dabei durch die Ringnut, in die der größte Außendurchmesser des Kopfes eingreift.

Bevorzugt wird als Material der Klemmhülse ein Weichmetall verwandt. Unter Weichmetall im Sinne der vorliegenden Anmeldung werden alle üblichen Gleitlagermetalle, wie Lagerbronzen, Aluminium und auch Kupfer, aber auch porös gesinterte Metalle verstanden, die ebenfalls gut verformbar sind. Diese Verformbarkeit kann dabei sowohl elastisch als auch plastisch sein. Wesentlich ist nur, daß bei elastischer Verformung eine genügend große Berührungsfläche entsteht und bei plastischer Verformung das verwandte Material nicht so weich ist, daß sich der ballige Kopf des Spannarmes durchdrücken kann. Aus diesem Grund können z. B. keine Klemmhülsen aus Blei eingesetzt werden.

Der Kopf des Spannelementes selbst ist zweckmäßig kugelförmig ausgeführt, weil durch die kugelförmige Ausführungsform, ohne daß zusätzlich seitliche Kräfte auftreten, sehr gut eine Kugelkalotte in der Klemmhülse gebildet werden kann.

Bevorzugt greift der Kopf im oberen Drittel der Metallhülse an, wodurch sichergestellt ist, daß der Andruck der Platte nicht nur an die rückwärtige Anlage der Ausnehmung des Klemmstahlhalters erfolgt, sondern daß zusätzlich noch eine Kraftkomponente nach unten gerichtet ist, wodurch die Schneidplatte ausgerichtet und zusätzlich befestigt wird.

Die Erfindung wird nachstehend anhand von in den Zeichnungen dargestellten Ausführungsbeispielen erläutert:

Fig. 1 zeigt einen Klemmstahlhalter in perspektivischer Darstellung nach dem Stand der Technik,

Fig. 2 zeigt ein als Kniehebel ausgebildetes Spannelement in einem Klemmstahlhalter als Schnitt-Darstellung,

Fig. 3 zeigt die Klemmhülse und Detail,

Fig. 4 einen Klemmstahlhalter, bei dem das Spannelement als Schieber ausgebildet ist,

Fig. 5 einen Kniehebel mit geschlitzter Klemmhülse,

Fig. 6 als Explosionsschaubild einen Klemmstahlhalter mit Exzenterspannelement.

Der Klemmhalter (7) weist eine Ausnehmung (8) auf, die zur Aufnahme der Stützplatte (9) und der Schneidplatte (1) dient. Die Stützplatte (9) wird durch eine Federbuchse (13), die die Stützplatte (9) durchgreift und in dem Bohrloch (17) des Klemmhalters (7) verankert ist, mit diesem verbunden. Die Federbuchse (13) weist einen Kragen (18) auf, der in die Aussenkung (16) der Stützplatte (9) eingreift, wodurch diese auf dem Boden (19) der Ausnehmung (8) gehalten wird.

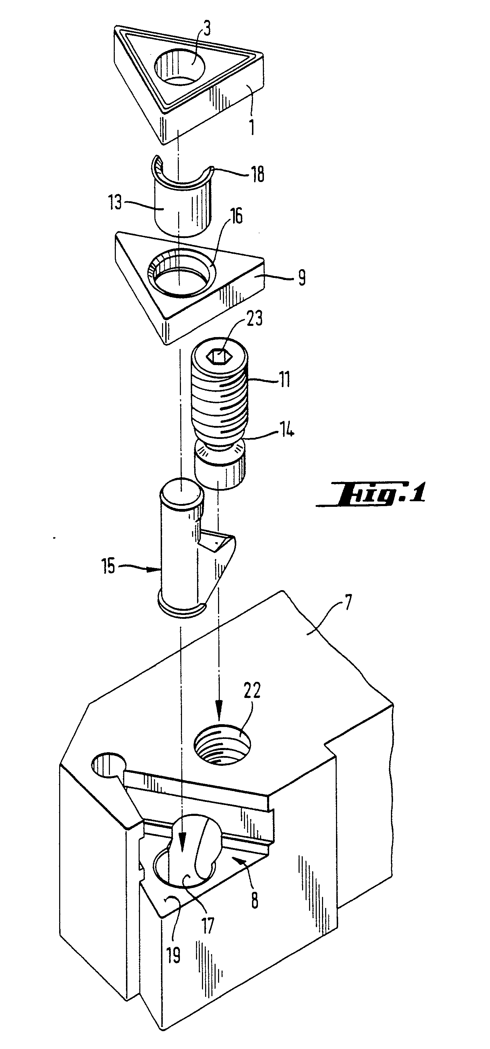

Das Spannelement (15) ist in den Figuren 1 bis 3 als Kniehebel (5) dargestellt, der aus dem Spannarm (6) mit daran befindlichem Kopf (4) und dem Druckarm (10) mit dem Kippansatz (21) besteht. Der Kippansatz (21) ruht auf dem Kipplager (20) im Klemmhalter (7). Der freie Schenkel des Druckarmes (10) reicht in die Gewindebohrung (22) hinein und befindet sich hier im Bereich der Ringnut (14) der Spannschraube (11). Die Spannschraube (11) ist mit einem Innensechskant (23) versehen, so daß durch Anziehen dieser Spannschraube (11) die Ringnut (14) auf das freie Ende des Druckarmes (10) drückt, wodurch der Kniehebel (5) um das Kipplager (20) geschwenkt wird, so daß der Kopf (4), der von der in die Schneidplatte (1) eingesetzten Klemmhülse umgeben ist, einen Druck in der Befestigungsbohrung (3) der Schneidplatte (1) in Richtung auf die Spannschraube (11) ausübt.

Die Ausnehmung (8) des Klemmhalters (7) weist eine umlaufende Anlage (25) auf, durch die im Auflagebereich der Schneidplatte (1) ein Freiraum (26) gebildet wird. Der Kopf (4) des Spannelementes (15) greift geringfügig unterhalb der unteren Kante der Anlage (25) an, so daß die angreifende Kraft in zwei Komponenten zerlegt wird, so daß die Schneidplatte (1) sowohl an die Anlage (25) als auch auf die Stützplatte (9) gepreßt wird.

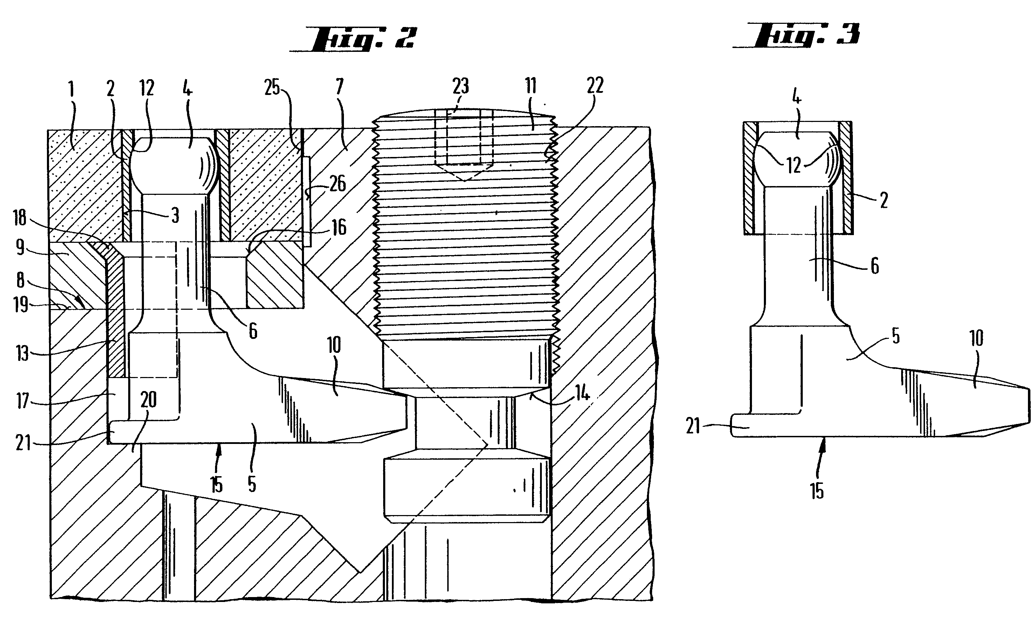

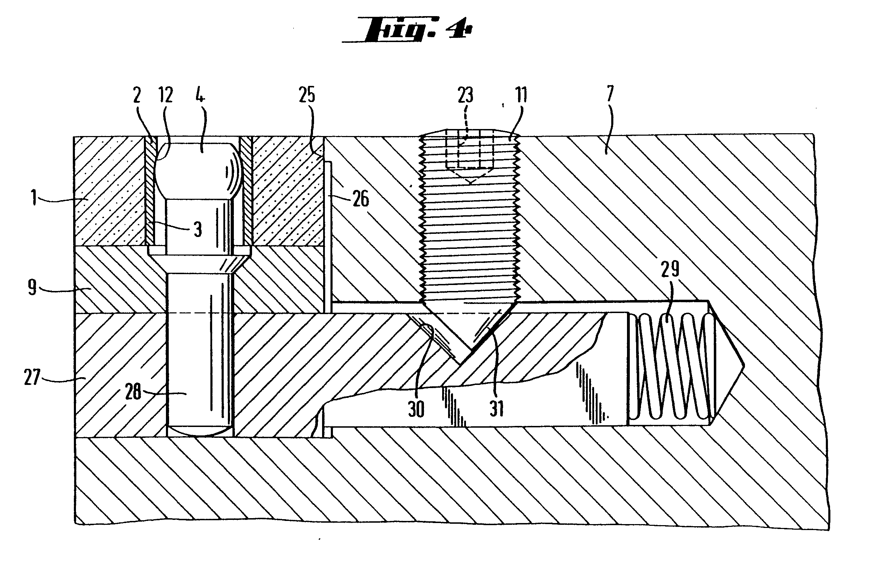

Bei den Figuren 2 und 3 ist die Klemmhülse (2) ein separates Teil der Konstruktion. Sie weist einen Innenansatz (12) auf, so daß sie über den Kopf (4) des Spannelementes (15) gestülpt werden kann und der Innenansatz (12) ihre Lage auf dem Kopf (4) fixiert. Gegenüber der Befestigungsbohrung (3) in der Schneidplatte (1) weist die Klemmhülse (2) in diesem Falle eine Gleitpassung oder, wie in Figur 3 dargestellt, größeres Spiel auf.

In Figur 4 ist eine andere Version des Spannelementes (15) dargestellt, das in diesem Fall als Schieber (27) ausgeführt ist. In den Schieber (27) ist der Kugelbolzen (28) eingepreßt, der gleichzeitig die Stützplatte (9) auf dem Schieber (27) befestigt. Eine Druckfeder (29) drückt den Schieber (27) nach außen, so daß die Schneidplatte (1) über den Kopf (4) des Kugelbolzens (28) gestülpt werden kann. Das Spannen erfolgt durch Anziehen der Spannschraube (11), die in ihrem unteren Bereich mit einem Kegel (31) versehen ist, der in die Kegelaussenkung (30) im Schieber (27) eingreift.

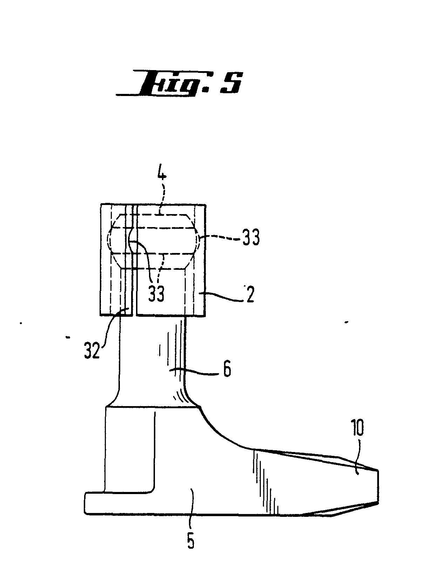

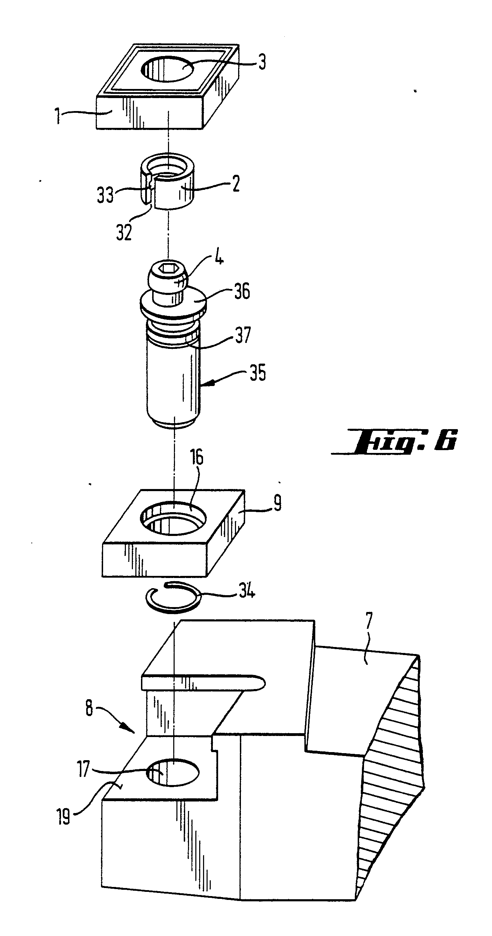

In den Figuren 5 und 6 ist eine Klemmhülse (2) dargestellt, die mit einem Längsschlitz (32) und einer Ringnut (33) versehen ist. Gemäß Figur 5 ist dabei die Klemmhülse (2) auf einen kugeligen Kopf (4) aufgeschoben. Das Explosionsbild der Figur 7 zeigt die Klemmhülse (2) als separates Teil, das oberhalb des Exzenterspannstückes (35) angeordnet ist. Das Exzenterspannstück (35) als solches wird durch die Stützplatte (9) geführt und mit dieser in die Ausnehmung (8) des Klemmhalters (7) eingesetzt. Der Teller (36) des Exzenterspannstückes (35) liegt dabei in der Aussenkung (16) der Stützplatte (9), der Federring (34) greift in die umlaufende Rundnut des Exzenterspannstückes (35) ein.

**Patentansprüche**

1. Klemmstahlhalter mit eingesetzter Schneidplatte (1) aus einem spröden, gesinterten Hartstoff, die eine Befestigungsbohrung (3) aufweist, bestehend aus einem Klemmhalter (7) mit einer Ausnehmung (8) zur Aufnahme einer Stützplatte (9) und der Schneidplatte (1), einem die Stützplatte (9) durchgreifendem Spannelement (15), dessen Kopf (4) in eine in der Befestigungsbohrung (3) der Schneidplatte (1) angeordnete Klemmhülse (2) aus einem verformbaren Material eingreift, gekennzeichnet durch die Kombination folgender Merkmale :

das Spannelement (15) ist an seinem in die Klemmhülse (2) eingreifendem Ende mit einem balligen Kopf (4), die Klemmhülse (2) mit einem durchgehenden Längsschlitz (32) sowie einer inneren Ringnut (33) versehen, in die der ballige Kopf (4) eingreift.

2. Klemmstahlhalter mit eingesetzter Schneidplatte (1) aus einem spröden, gesinterten Hartstoff, die eine Befestigungsbohrung (3) aufweist, bestehend aus einem Klemmhalter (7) mit einer Ausnehmung (8) zur Aufnahme einer Stützplatte (9) und der Schneidplatte (1), einem die Stützplatte (9) durchgreifendem Spannelement (15), dessen Kopf (4) in eine in der Befestigungsbohrung (3) der Schneidplatte (1) angeordnete Klemmhülse (2) aus einem verformbaren Material eingreift, gekennzeichnet durch die Kombination folgender Merkmale :

das Spannelement (15) ist an seinem in die Klemmhülse (2) eingreifendem Ende mit einem balligen Kopf (4) und die Klemmhülse (2) mit einem Innenansatz (12) versehen, gegen den der ballige Kopf (4) anliegt.

3. Klemmstahlhalter nach einem der Ansprüche 1 oder 2, dadurch gekennzeichnet, daß die Klemmhülse (2) aus Weichmetall besteht.

4. Klemmstahlhalter nach einem der Ansprüche 1 bis 3, dadurch gekennzeichnet, daß der Kopf (4) des Spannelementes (15) kugelförmig ausgeführt ist.

5. Klemmstahlhalter nach einem der Ansprüche 1 bis 4, dadurch gekennzeichnet, daß der Kopf (4) im oberen Drittel der Klemmhülse (2) angreift.

6. Klemmstahlhalter nach einem der Ansprüche 1 bis 5, dadurch gekennzeichnet, daß die Wandstärke der Klemmhülse (2) 0,4 bis 1,0 mm beträgt.

**Claims**

1. Clamping tool holder having an inserted cutting plate (1) which is made of a brittle, sintered hard material and has a fixing bore (3), comprising a clamping holder (7) having a recess (8) for accommodating a support plate (9) and the cutting plate (1), and a gripping member (15) which extends through the support plate (9) and the head (4) of which engages in a clamping sleeve (2) made of a deformable material which is arranged in the fixing bore (3) in the cutting plate (1), characterised by the combination of the following features :

the gripping member (15) is provided with a rounded head (4) at its end engaging in the clamping sleeve (2), and the clamping sleeve (2) is provided with a longitudinal through-slet (32) and an inner annular groove (33) into which the rounded head (4) engages.

2. Clamping tool holder having an inserted cutting plate (1) which is made of a brittle, sintered hard material and has a fixing bore (3), comprising a clamping holder (7) having a recess (8) for accommodating a support plate (9) and the cutting plate (1), and a gripping member (15) which extends through the support plate (9) and the head (4) of which engages in a clamping sleeve (2) made of a deformable material which is arranged in the fixing bore (3) in the cutting plate (1), characterised by the combination of the following features :

the gripping member (15) is provided with a rounded head (4) at its end engaging in the clamping sleeve (2), and the clamping sleeve (2) is provided with an inner projection (12) against which the rounded head (4) rests.

3. Clamping tool holder according to claim 1 or 2, characterised in that the clamping sleeve (2) is made of a soft metal.

4. Clamping tool holder according to any one of claims 1 to 3, characterised in that the head (4) of the gripping member (15) is spherical.

5. Clamping tool holder according to any one of claims 1 to 4, characterised in that the head (4) engages with the upper third of the clamping sleeve (2).

6. Clamping tool holder according to any one of claims 1 to 5, characterised in that the wall of the clamping sleeve (2) is from 0.4 to 1.0 mm

thick.

**Revendications**

1. Porte-plaquette en acier à plaquette de coupe rapportée (1) fabriquée en un matériau fragile fritté à résistance mécanique élevée et pourvue d'un alésage de fixation (3), lequel porte-plaquette est constitué par un support (7) muni d'un évidement (8) destiné à recevoir une plaque d'appui (9) et la plaquette de coupe (1), par un élément de maintien (15) traversant la plaque d'appui (9) et dont la tête (4) s'engage dans une douille de serrage (2) réalisée en un matériau déformable et disposé dans l'alésage de fixation (3) de la plaquette (1), caractérisé par la combinaison des caractéristiques suivantes :

l'élément de maintien (15), à son extrémité s'engageant dans la douille de serrage (2), est muni d'une tête bombée (4), et la douille de serrage (2) comporte une fente longitudinale continue (32) ainsi qu'une rainure annulaire intérieure (33) dans laquelle s'engage la tête bombée (4).

2. Porte-plaquette en acier à plaquette de coupe rapportée fabriquée en un matériau fragile fritté à résistance mécanique élevée et pourvue d'un alésage de fixation (3), lequel porte-plaquette est constitué par un support (7) muni d'un évidement (8) destiné à recevoir une plaque d'appui (9) et la plaquette de coupe (1), par un élément de maintien (15) traversant la plaque d'appui (9) et dont la tête (4) s'engage dans une douille de serrage (2) réalisée en un matériau déformable et disposée dans l'alésage de fixation (3) de la plaquette (1), caractérisé par la combinaison des caractéristiques suivantes :

l'élément de maintien (15), à son extrémité s'engageant dans la douille de serrage (2), est muni d'une tête bombée (4) et la douille de serrage (2) comporte un épaulement intérieur (12) contre lequel vient s'appliquer la tête bombée (4).

3. Porte-plaquette en acier selon l'une des revendications 1 ou 2, caractérisé par le fait que la douille de serrage (2) est réalisée en un métal doux.

4. Porte-plaquette en acier selon l'une des revendications 1 à 3, caractérisé par le fait que la tête (4) de l'élément de maintien (15) est réalisé sphérique.

5. Porte-plaquette en acier selon l'une des revendications 1 à 4, caractérisé par le fait que la tête (4) agit dans le tiers supérieur de la douille de serrage (2).

6. Porte-plaquette en acier selon l'une des revendications 1 à 5, caractérisé par le fait que l'épaisseur de la paroi de la douille de serrage (2) est de 0,4 à 1,0 mm.

**Fig.1**

**Fig. 3**

**Fig. 2**

# Fig. 4.

Fig. 5

*Fig. 6*